# EUROPÄISCHE PATENTSCHRIFT

(11) **EP 2 740 947 B1**
(45) Veröffentlichungstag und Bekanntmachung des Hinweises auf die Patenterteilung: **22.06.2016**
(21) Anmeldenummer: 12195622.1
(22) Anmeldetag: 05.12.2012
(51) Int. Cl.: F16B 13/04, E04B 1/76

(54) **Befestigungssystem mit entkoppelbarem Halteteller**
Attachment system with detachable retaining plate
Système de fixation avec disque de maintien pouvant être découplé

(43) Veröffentlichungstag der Anmeldung: 11.06.2014
(73) Patentinhaber: EJOT Baubefestigungen GmbH, 57302 Bad Berleburg (DE)
(72) Erfinder: Hackler, Erhard, 57319 Bad Berleburg (DE)
(74) Vertreter: Hohgardt, Martin

(56) Entgegenhaltungen:
- EP-A2- 1 318 250
- EP-A2- 1 857 607

## Beschreibung

Die vorliegende Erfindung betrifft ein Befestigungssystem insbesondere zur Befestigung von Dämmstoff an einem Untergrund, insbesondere an einer Gebäudeaußenwand und ein entsprechendes Befestigungsverfahren.

Befestigungssysteme zur Befestigung von Dämmstoffplatten werden häufig als Dämmstoffhalter bezeichnet. Derartige Dämmstoffhalter weisen häufig einen Schaft und einen daran angeordneten Teller auf. Bei der Montage wird der Schaft des Dämmstoffhalters durch eine Öffnung in dem Dämmstoff geschoben und mit einem Spreizelement in dem Untergrund befestigt. Durch den Teller des Dämmstoffhalters wird dann der Dämmstoff an dem Untergrund gehalten.

Es gibt Dämmstoffhalter deren Teller nach der Beendigung der Montage auf der Dämmstoffplatte aufliegen. Es gibt aber auch Dämmstoffhalter deren Teller nach Beendigung der Montage vertieft in der Dämmstoffplatte angeordnet sind, wobei die Vertiefung auf unterschiedliche Weise erzielt werden kann.

Aus EP 1 318 250 A2 ist ein Dämmstoffhalter bekannt, der zur vertieften Montage geeignet ist. Hierfür weist der Dämmstoffhalter an dem Halteteller Schneidmittel auf. Der Dämmstoffhalter weist einen Schaft auf, wobei sich an einem Ende des Schafts ein Halteteller befindet und das andere Ende des Schafts eine Spreizzone aufweist, um den Dämmstoffhalter in dem Untergrund zu befestigen. Nach dem Anordnen des Dämmstoffhalters in dem Untergrund, wird ein Spreizelement in den Dämmstoffhalter derart eingedreht, dass sich der Halteteller in den Dämmstoff kreisförmig einschneiden kann beziehungsweise den Dämmstoff zusammenpressen kann und somit eine Vertiefung bildet. Das gleichzeitige Aufspreizen der Spreizzone durch das Spreizelement erzeugt eine feste Verankerung des Dämmstoffhalters in dem Untergrund. Die kreisrunde Vertiefung im Dämmstoff kann, nach dem Setzen des Dämmstoffhalters, mit einer Dämmstoffrondelle verschlossen werden.

Derartige Dämmstoffhalter haben allerdings den Nachteil, dass für unterschiedliche Dämmstoffdicken zusätzlich zu den gegebenenfalls notwendigen Spreizelementen mit unterschiedlichen Längen auch Dämmstoffhalter mit unterschiedlichen Schaftlängen benötigt werden.

Ein weiteres, gattungsbildendes Befestigungssystem ist aus der EP 1 857 607 A2 bekannt.

Die Aufgabe der vorliegenden Erfindung ist es daher, ein Befestigungssystem bereitzustellen, das die oben genannten Nachteile nicht aufweist. Außerdem soll das Befestigungssystem einfach herstellbar und einfach montierbar sein.

Diese Aufgabe wird erfindungsgemäß durch das Befestigungssystem gemäß Anspruch 1 und durch das Verfahren gemäß Anspruch 11 gelöst.

Das erfindungsgemäße Befestigungssystem zur Befestigung von Dämmstoff an einem Untergrund, weist ein Spreizelement und einen Halteteller zum Halten des Dämmstoffs auf. Das Spreizelement weist an einem ersten - beispielsweise vorderen - Endbereich Mittel auf, um einen Dübel aufzuspreizen. Erfindungsgemäß weist das Spreizelement an einem zweiten - beispielsweise hinteren - Endbereich mindestens ein erstes Fixiermittel und mindestens ein zweites Fixiermittel auf, die jeweils derart ausgestaltet sind, um den Halteteller axial zu fixieren. Das mindestens eine erste Fixiermittel ist an dem Spreizelement näher an dem ersten Endbereich angeordnet als das mindestens eine zweite Fixiermittel und das mindestens eine erste Fixiermittel ist derart ausgestaltet, dass es den Halteteller bis zur Ausübung einer bestimmten Kraft axial fixiert.

Dieses erfindungsgemäße Befestigungssystem kann kostengünstig hergestellt und einfach und schnell montiert werden. Mit Hilfe dieses erfindungsgemäßen Befestigungssystems kann für eine Vielzahl von verschiedenen Dämmstoffdicken der gleiche Dübel verwendet werden. Lediglich das Spreizelement muss in Abhängigkeit von der Dämmstoffdicke gewählt werden.

Durch die erfindungsgemäßen ersten und zweiten Fixiermittel kann das Befestigungssystem auch ohne großen Aufwand bestmöglich in der Öffnung in dem Untergrund angeordnet werden, um eine richtige Montage zu ermöglichen. Das erste Fixiermittel ermöglicht, dass auch kurze Dübel, die während dem Setzen vollständig in einem Bohrloch verschwinden, in der richtigen Setztiefe angeordnet werden können. Durch das Lösen des ersten Fixiermittels ab einer bestimmten Kraft wird außerdem verhindert, dass sich der derart angeordnete beziehungsweise gesetzte Dübel beim Eintreiben von der richtigen Setztiefe weg bewegt.

Mit dem erfindungsgemäßen Befestigungssystem kann ein Dämmstoff beispielsweise folgendermaßen an einem Untergrund befestigt werden. Zunächst wird der Halteteller derart an dem Spreizelement angeordnet, dass ihn das mindestens eine erste Fixiermittel an dem Spreizelement fixiert. Dann wird das Befestigungssystem, das heißt das Spreizelement mit dem daran fixierten Halteteller in dem Untergrund, beispielsweise in einem Bohrloch angeordnet. Dieses Anordnen in dem Untergrund wird auch als Setzen bezeichnet.

In dieser Position des Befestigungssystems in dem Untergrund, die im Folgenden als erste Position oder als Vormontageposition bezeichnet wird, befindet sich der Halteteller in einer vordefinierten Lage zu der Dämmstoffplatte. Ein Beispiel für diese Lage ist, wenn der Halteteller auf dem Dämmstoff aufliegt. In einem anderen Beispiel kann das gegebenenfalls vorhandene Schneidmittel an dem Halteteller auf dem Dämmstoff aufliegen oder ganz oder teilweise in den Dämmstoff eindringen.

Das erfindungsgemäße Befestigungssystem wird vorzugsweise zusammen mit einem Dübel verwendet. In einer bevorzugten Ausführungsform des erfindungsgemäßen Befestigungssystems ist ein Dübel ein Element des Befestigungssystems. Grundsätzlich kann ein derartiger Dübel vor dem Setzen des Befestigungssystems, das heißt vor dem Anordnen des Befestigungssystems in dem Untergrund, in dem Untergrund angeordnet werden. Eine mögliche Alternative ist, dass der Dübel in einer Verbindung zu dem Spreizelement steht. Das Spreizelement kann zum Beispiel klemmend mit dem Dübel verbunden sein. Hierdurch wird der Dübel vorzugsweise nicht gespreizt oder nur leicht gespreizt.

Für die Montage des Befestigungssystems ist es wichtig, dass sich der Dübel an der richtigen Position in dem Untergrund befindet, wenn er gespreizt wird. Der Monteur kann allerdings bei der Montage von außen nicht erkennen, wo sich der Dübel befindet. Durch das Anordnen des Haltetellers, der von dem mindestens einen ersten Fixiermittel fixiert wird, in einer bestimmten Lage zu dem Dämmstoff, wird sichergestellt, dass sich die Spitze des Spreizelements in einem vorbestimmten Abstand zu der Dämmstoffoberfläche befindet.

Nach dem Setzen findet das Eintreiben des Spreizelements statt. Hierbei wird das Spreizelement weiter in den Untergrund bewegt, so dass es in den Dübel eindringt und diesen aufspreizt. Der Dübel wird beim Eintreiben vorzugsweise nicht weiter in den Untergrund hinein bewegt oder nicht wesentlich weiter bewegt. Wenn das Spreizelement beispielsweise eine Schraube ist, kann das Eintreiben zum Beispiel eine Schraubbewegung sein. Das Spreizelement kann aber beispielsweise auch eine Art Nagel sein, der zum Beispiel mit Hilfe eines Hammers oder eines vergleichbaren Werkzeugs in den Untergrund bewegt, d.h. eingetrieben werden kann.

Während das Spreizelement weiter in den Untergrund bewegt wird, kann sich der Halteteller nicht in gleicher Weise in diese Richtung bewegen, da er von dem Dämmstoff aufgehalten wird. Dadurch wird eine Kraft auf den Halteteller ausgeübt. Diese Kraft ist größer als die Kraft bis zu der das mindestens eine erste Fixiermittel den Halteteller fixieren kann, so dass das mindestens eine erste Fixiermittel den Halteteller nicht weiter fixiert. Durch dieses Lösen der Fixierung, das auch als Entkopplung bezeichnet werden kann, kann das Spreizelement weiter in den Dübel eindringen und diesen aufspreizen.

Der Halteteller wird nun von dem mindestens einen zweiten Fixiermittel fixiert. Das mindestens eine zweite Fixiermittel fixiert den Halteteller vorzugsweise erst dann, wenn das Spreizelement eine gewünschte Eindringtiefe in den Dübel erreicht hat, wobei diese Eindringtiefe vorzugsweise einen bestimmten axialen Widerstand gegen ein Herausziehen bereitstellt. Nun wird das Spreizmittel weiter in den Dübel eingetrieben und der Halteteller vorzugsweise mit Hilfe von diesem mindestens einen zweiten Fixiermittel in die gewünschte Lage zu dem Dämmstoff bewegt. Hierbei kann es sich zum Beispiel um eine vertiefte Anordnung des Haltetellers handeln oder der Halteteller kann zum Beispiel auf der Oberfläche des Dämmstoffs angeordnet werden. Diese Position des Befestigungssystems wird als zweite Position oder als Endmontageposition bezeichnet.

Ein Schaft, der den Dübel mit dem Teller verbindet, wie er im Stand der Technik verwendet wird, ist nun nicht mehr notwendig. Dies hat den Vorteil, dass unabhängig von der Dämmstoffdicke der gleiche Dübel verwendet werden kann. Auch muss bei dem erfindungsgemäßen Befestigungssystem während der Montage keine sogenannte Stauchkraft bereitgestellt werden mit der bei den aus dem Stand der Technik bekannten Dübeln der Schaft um das Maß der Tellereinsenkung gestaucht beziehungsweise zusammengedrückt werden muss. Da diese Stauchkraft erfindungsgemäß nun nicht mehr benötigt wird, kann durch das erfindungsgemäße Befestigungssystem bei der Verwendung von Schrauben als Spreizmittel die Gefahr eines sogenannten Überdrehens der Schraube in dem Dübel verhindert werden.

Durch die erfindungsgemäßen ersten und zweiten Fixiermittel wird verhindert, dass durch die bei der Montage auftretenden Kräfte, das Spreizelement und/oder der Halteteller beschädigt werden. Außerdem wird verhindert, dass sich der Dübel bei der Montage gegebenenfalls von der gewünschten Position weg bewegt. Denn durch das erfindungsgemäße erste Fixiermittel wird sichergestellt, dass das Eintreiben des Spreizelements zunächst hauptsächlich - in einer bevorzugten Ausführungsform ausschließlich - das Aufspreizen des Dübels bewirkt und erst nachdem der Dübel durch dieses Aufspreizen relativ fest in dem Untergrund fixiert ist, das Eintreiben des Spreizelements ein Pressen des Haltetellers gegen den Dämmstoff bewirkt.

Erfindungsgemäß weist das mindestens eine erste Fixiermittel mindestens eine schiefe Ebene auf. Über den Verlauf der mindestens einen schiefen Ebene kann der Durchmesser des Spreizmittels, in einem bestimmten Bereich, rampenförmig beispielsweise in radialer Richtung aufgeweitet werden. Erfindungsgemäß geht die schiefe Ebene axial in Richtung des zweiten Fixiermittels in einen umlaufenden Ring über. Die schiefe Ebene ermöglicht das Fixieren des Haltetellers in einer ersten Position bis die auf den Halteteller wirkende Kraft den Halteteller über die schiefe Ebene und über den umlaufenden Ring in eine zweite Position bewegt.

In einer weiteren bevorzugten Ausführungsform weist das mindestens eine zweite Fixiermittel einen umlaufenden Ring auf. Mit Hilfe dieses Rings kann der Halteteller zum Beispiel in der zweiten Position gehalten werden. In dieser zweiten Position kann der Halteteller zum Beispiel von dem Spreizelement in den Dämmstoff gezogen werden und so eine vertiefte Montage ermöglichen.

In noch einer bevorzugten Ausführungsform kann das Spreizelement durch eine Schraube gebildet werden, die vorzugsweise aus Kunststoff besteht. Kunststoffschrauben sind kostengünstig herstellbar und ermöglichen es Wärmebrücken zu reduzieren. Durch die erfindungsgemäßen ersten und zweiten Fixiermittel werden die auf das Spreizelement wirkenden Kräfte derart reduziert, dass selbst eine Kunststoffschraube bei der Montage nicht beschädigt wird.

In einer bevorzugten Ausführungsform weist der Halteteller an der dem Dämmstoff zugewandten Seite mindestens ein Schneidmittel auf. Mit Hilfe eines derart angeordneten Schneidmittels kann der Halteteller vertieft in dem Dämmstoff angeordnet werden. Das mindestens eine Schneidmittel kann beispielsweise durch einen Schneidring gebildet werden, der beispielsweise eine Unebenheit aufweist, die bewirkt, dass der Schneidring in den Dämmstoff einschneidet. Das dazwischen liegende Dämmstoffmaterial kann durch den Halteteller eingedrückt, das heißt komprimiert werden. In einer weiteren Ausführungsform kann anstatt eines Schneidrings mindestens ein Schneidzahn verwendet werden. Alternativ können auch mehrere Schneidzähne verwendet werden, die das Eindringen des Haltetellers in den Dämmstoff erleichtern.

Im Rahmen der vorliegenden Erfindung können allerdings auch andere Arten von Schneidmitteln verwendet werden. Das mindestens eine Schneidmittel kann beispielsweise auch derart an der dem Dämmstoff zugewandten Seite des Haltetellers angeordnet sein, dass es das Dämmstoffmaterial unter dem Halteteller zumindest teilweise löst. Ein derartiges Lösen von Dämmstoffmaterial wird beispielsweise auch als Fräsen bezeichnet.

In noch einer bevorzugten Ausführungsform werden das Spreizelement und der Halteteller aus unterschiedlichen Materialien gefertigt. Dies ermöglicht es beispielsweise das Spreizelement und den Halteteller aus unterschiedlichen Kunststoffen mit unterschiedlichen Härtegraten zu fertigen, um somit das Kosten-Nutzen Verhältnis zu optimieren.

In einer weiteren bevorzugten Ausführungsform hat der Halteteller in einem mittleren Bereich - zentrisch - eine Öffnung. Mit Hilfe dieser Öffnung in dem Halteteller kann das Spreizelement durch den Halteteller hindurch geschoben werden. Die Öffnung selber oder Mittel an der Öffnung können zu der axialen Verbindung mit dem Halteteller beitragen. Dies ermöglicht eine gleichmäßige Verteilung der auf den Halteteller wirkenden Kräfte zum Beispiel während der Montage und/oder in dem montierten Zustand.

In noch einer weiteren bevorzugten Ausführungsform weist der Halteteller mindestens einen Rasthaken auf. Ein derartiger Rasthaken wird durch einen Vorsprung gebildet. In einer Ausführungsform weist der Rasthaken ein flexibles Element auf, das eine Bewegung des Rasthakens ermöglicht. In einer anderen Ausführungsform kann auch ein Element, das mit dem Rasthaken zusammen wirkt, flexibel, das heißt beweglich sein. Der mindestens eine Rasthaken kann beispielsweise beim Einbringen des Spreizelements in den Dübel über die schiefe Ebene radial aufgeweitet werden, wodurch sich der Halteteller in axialer Richtung über das erste Fixiermittel bewegen kann.

In einer weiteren bevorzugten Ausführungsform ist in dem hinteren Endbereich des Spreizelements eine Dämmstoffrondelle angeordnet. Die Dämmstoffrondelle ist vorzugsweise auf der Seite des mindestens einen Fixiermittels angeordnet, die von dem vorderen Endbereich weiter entfernt ist. Die Dämmstoffrondelle besteht vorzugsweise aus dem gleichen Material wie der verwendete Dämmstoff. Die Dämmstoffrondelle ist vorzugsweise derart ausgestaltet, dass sie eine Vertiefung in dem Dämmstoff verschließt. In der Vertiefung kann sich ein vertieft montiertes Befestigungssystem befinden. Durch die Montage einer Dämmstoffrondelle können Wärmebrücken, die durch die Montage des Dämmstoffhalters entstanden sind, minimiert werden. Durch das Verschließen der Vertiefung mit einer Dämmstoffrondelle entsteht auch eine homogene Oberfläche und ein gleichmäßiger Putzauftrag kann somit gewährleistet werden.

Das erfindungsgemäße Verfahren zur Befestigung von Dämmstoff an einem Untergrund weist die folgenden Schritte auf: Zunächst wird ein Spreizelement in einen Untergrund gesetzt, wobei mindestens ein erstes Fixiermittel einen Halteteller an dem Spreizelement axial fixiert. Das Spreizelement kann zum Beispiel in ein Bohrloch in dem Untergrund gesetzt werden, wobei das Setzen zum Beispiel auch als Anordnen bezeichnet werden kann. Gemäß dem erfindungsgemäßen Verfahren wird das Spreizelement danach in einen Dübel in dem Untergrund eingetrieben, wobei das mindestens eine erste Fixiermittel den Halteteller so lange axial fixiert, bis der Halteteller eine bestimmte Kraft auf das erste Fixiermittel ausübt. Durch das Eintreiben wird das Spreizelement relativ zu dem Dübel in den Dübel bewegt. Dabei kann sich das Spreizelement zum Beispiel schon in dem Dübel befinden und es kann dann durch das Eintreiben weiter in den Dübel hinein bewegt werden. Gemäß dem erfindungsgemäßen Verfahren wird das Spreizelement danach weiter in den Dübel eingetrieben, über eine schiefe Ebene des mindestens einen ersten Fixiermittels, die in radialer Richtung ausgerichtet ist und axial in Richtung eines mindestens zweiten Fixiermittels in einen umlaufenden Ring übergeht, wobei das mindestens eine zweite Fixiermittel an dem Spreizelement den Halteteller axial fixiert.

Im Folgenden werden das erfindungsgemäße Befestigungssystem und das erfindungsgemäße Verfahren zur Befestigung von Dämmstoff beispielhaft anhand der in den nachfolgenden Figuren gezeigten Ausführungsform näher erläutert. Es zeigen:
- Fig. 1a:: eine Seitenansicht einer Ausführungsform des erfindungsgemäßen Befestigungssystems in der ersten Position;
- Fig. 1b:: eine Seitenansicht der Ausführungsform des erfindungsgemäßen Befestigungssystems in der zweiten Position;
- Fig. 2a, 2b, 2c:: Detailansichten und eine perspektivische Detailansicht der Ausführungsform des erfindungsgemäßen Befestigungssystems in der das mindestens eine erste Fixiermittel und teilweise auch das mindestens eine zweite Fixiermittel zu sehen sind;
- Fig. 3a, 3b:: Querschnitte der Ausführungsform des erfindungsgemäßen Befestigungssystems in der sich der Halteteller in der ersten und in der zweiten Position befindet; und
- Fig. 4a, 4b:: perspektivische Detailansichten des erfindungsgemäßen Befestigungssystems in der sich der Halteteller in der ersten und in der zweiten Position befindet.

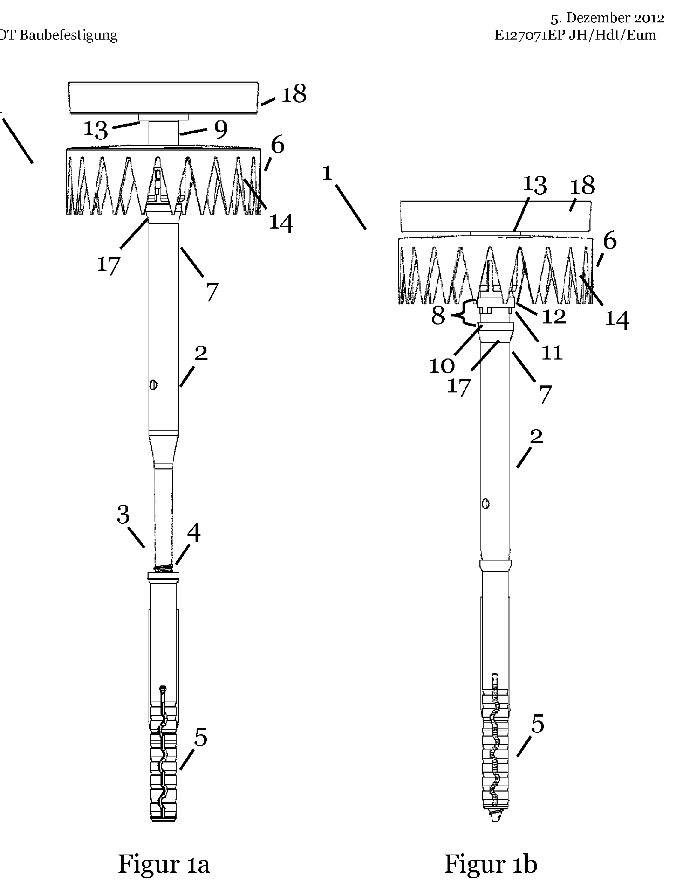

Figur 1a zeigt eine beispielhafte Ausführungsform des erfindungsgemäßen Befestigungssystem 1 in der ersten Position. Das erfindungsgemäße Befestigungssystem 1 weist ein Spreizelement 2 und einen Halteteller 6 auf. In der vorliegenden Ausführungsform weist das Befestigungssystem außerdem einen Dübel 5 und eine Dämmstoffrondelle 18 auf. Wie in Fig. 1a gezeigt sind das Spreizelement 2, der Halteteller 6, der Dübel 5 und die Dämmstoffrondelle 18 bei dieser Ausführungsform miteinander verbunden.

Zur Befestigung des Dämmstoffs an dem Untergrund wird das Spreizelement 2 gegebenenfalls zusammen mit einem daran angeordneten oder daran befestigten Dübel 5 durch den Dämmstoff hindurch in einen Untergrund gesetzt beziehungsweise angeordnet. In der in Figur 1a gezeigten Ausführungsform weist das Spreizelement 2 an dem vorderen - ersten - Endbereich 3 Mittel 4 zum Aufspreizen des Dübels 5 auf, welche den Dübel 5 spreizen, wenn das Spreizelement 2 in den Dübel 5 eingebracht wird. Erfindungsgemäß wird das Befestigungssystem 1 in der in Figur 1a gezeigten Ausführungsform in der ersten Position in dem Untergrund angeordnet, dabei wird der Halteteller 6 an dem Spreizelement 2 mit Hilfe des mindestens einem ersten Fixiermittels 8 axial fixiert. Der Halteteller 6 kann zum Beispiel in der ersten Position fixiert werden, indem das Spreizelement 2 von der Oberseite des Haltetellers 6, das heißt der Seite, die vom Untergrund weg zeigt, durch den Halteteller 6 geschoben wird. Dabei kann der Halteteller 6 über eine keilförmige Aufweitung 17 und einen umlaufenden Ring 10 geschoben werden.

In der in Figur 1a gezeigten Ausführungsform weist der Halteteller 6 an seiner dem Dämmstoff zugewandten Seite als Schneidmittel mehrere Schneidzähne 14 auf. Die Schneidzähne 14 sind in dieser Ausführungsform am Umfang des Haltetellers 6 kreisförmig angeordnet. Der Fachmann kennt aber eine Vielzahl von Möglichkeiten, wie Schneidmittel an dem Halteteller angeordnet und ausgestaltet sein können. Beispielsweise kann der Halteteller 6 einen Schneidring aufweisen.

Weiterhin weist die in Figur 1a gezeigte Ausführungsform eine Dämmstoffrondelle 18 auf, die an dem hinteren - zweiten - Endbereich 7 des Spreizelements 2 angeordnet ist.

Figur 1b zeigt die Ausführungsform des Befestigungssystems 1 in der zweiten Position. In dieser zweiten Position ist das Spreizelement 2 in dem Dübel 5 eingetrieben, um den Dübel aufzuspreizen und somit in dem Untergrund zu verankern. Durch das Eintreiben des Spreizelements 2 in den Dübel 5 bewegt sich auch der Halteteller 6 in Richtung des Dämmstoffs. In der in Figur 1b gezeigten Ausführungsform konnte sich der Halteteller 6 nicht in gleicher Weise wie das Spreizelement 2 in diese Richtung bewegen, da er von dem Dämmstoff aufgehalten wurde. In dieser Situation hat sich in dieser Ausführungsform durch die Reibung zwischen dem Halteteller 6 und dem Dämmstoff eine Kraft entwickelt, durch die der Halteteller 6 über das erste Fixiermittel 8 geschoben wird. In dieser Ausführungsform weist das erste Fixiermittel 8 eine schiefe Ebene 11 und einen dahinter angeordneten unlaufenden Ring 12 auf. Danach wird der Halteteller 6 durch das zweite Fixiermittel 9 axial fixiert, das in Figur 1b durch einen umlaufender Ring 13 realisiert ist.

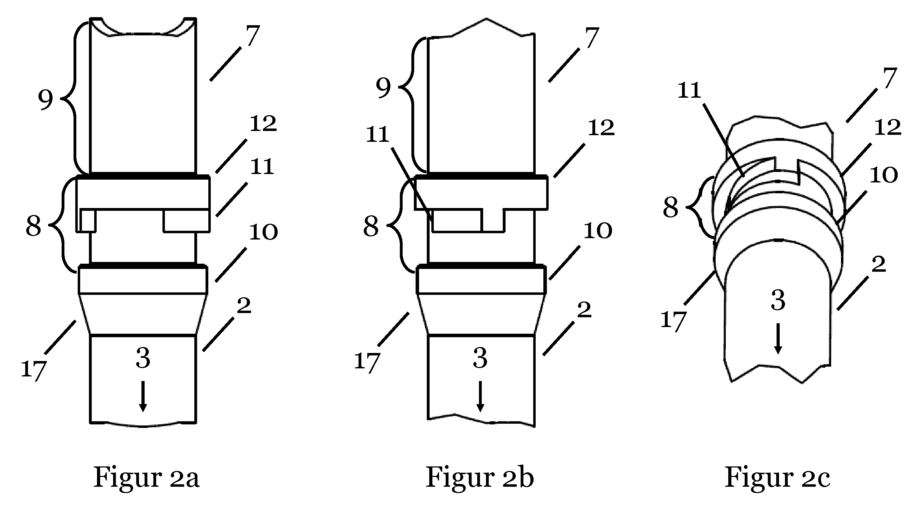

Figuren 2a, 2b und 2c zeigen Detailansichten der Ausführungsform des mindestens einen ersten Fixiermittels 8 und des mindestens einen zweiten Fixiermittels 9. In der in den Figuren 2 gezeigten Ausführungsform ist das mindestens eine erste Fixiermittel 8 näher an dem vorderen - ersten - Endbereich 3 des Spreizelements 2 angeordnet, als das mindestens eine zweite Fixiermittel 9. Weiterhin ist in der in den Figuren 2 gezeigten Ausführungsform vor dem mindestens einen ersten Fixiermittel 8, das heißt näher an dem vorderen - ersten - Endbereich 3 eine keilförmige Aufweitung 17 des Spreizelements 2 auf den Durchmesser des umlaufenden Rings 10 angeordnet. Das eigentliche, mindestens eine erste Fixiermittel 8 weist in der gezeigten Ausführungsform mindestens eine sich radial erstreckende schiefe Ebene 11 auf. In dem in der in den Figuren 2 gezeigten Ausführungsform läuft die schiefe Ebene 11 axial in Richtung des zweiten Fixiermittels 9 in einen umlaufenden Ring 12 über. Das mindestens eine zweite Fixiermittel 9 wird in der in den Figuren 2 gezeigten Ausführungsform durch den Bereich des Spreizelements 2 oberhalb des mindestens einen ersten Fixiermittels 8 gebildet. In diesem Bereich befindet sich auch der in den Figuren 1a und 1b gezeigte umlaufende Ring 13.

Wenn das Spreizelement 2 zum Beispiel eine Schraube ist, die beim Eintreiben in den Dübel gedreht wird, kann es sein, dass der Halteteller 6 beim Auftreffen auf dem Dämmstoff von diesem gehalten wird. In dieser Situation kann der Halteteller 6, insbesondere ein Rasthaken 16 des Haltetellers 6 durch die schiefe Ebene 11 des ersten Fixiermittels 8 radial aufgeweitet werden und somit die Fixierung durch das erste Fixiermittel 8 aufgehoben werden. Der Halteteller 6 kann dann über die schiefe Ebene 11 und den dahinter angeordneten Ring 12 in den Bereich des zweiten Fixiermittels 9 verschoben werden. Dadurch kann die zweite Position, beziehungsweise die Endmontageposition, erreicht werden.

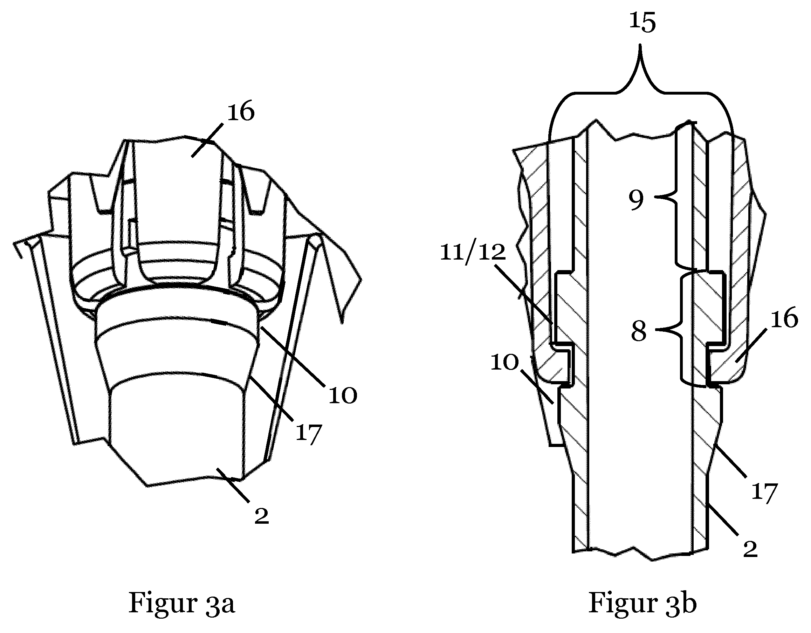

Figuren 3a und 3b zeigen im Querschnitt Detailansichten der in den Figuren 2 gezeigten Ausführungsform des mindestens einen ersten und des mindestens einen zweiten Fixiermittels 8, 9 mit aufgesetztem Halteteller 6 in der ersten Position (Figur 3a), beziehungsweise in der Vormontageposition und in der zweiten Position (Figur 3b), beziehungsweise in der Endmontageposition. In der in den Figuren 3 gezeigten Ausführungsform, weist der Halteteller 6 mehrere Rasthaken 16 auf deren bewegliche Vorsprünge sich in der ersten Position in dem Bereich des mindestens einen ersten Fixiermittels 8 befinden. Der Halteteller 6 wird in dieser Ausführungsform durch das Eingreifen der Rasthaken 16 in den Zwischenraum zwischen dem umlaufenden Ring 10 und der mindestens einen schiefen Ebenen 11, beziehungsweise des umlaufenden Rings 12, gehalten. Wird eine genügende Kraft auf den Halteteller 6 ausgeübt, beispielsweise durch Setzen des Spreizelements 2 und Aufstoßen des Haltetellers 6 auf die Oberfläche der Dämmstoffplatte, so können die Rasthaken 16 nicht mehr von dem mindestens einen ersten Fixiermittel 8 gehalten werden und der Halteteller 6 bewegt sich in die zweite Position (Figur 3b). Diese Bewegung ist in Figur 3a mit den schwarzen Pfeilen angedeutet.

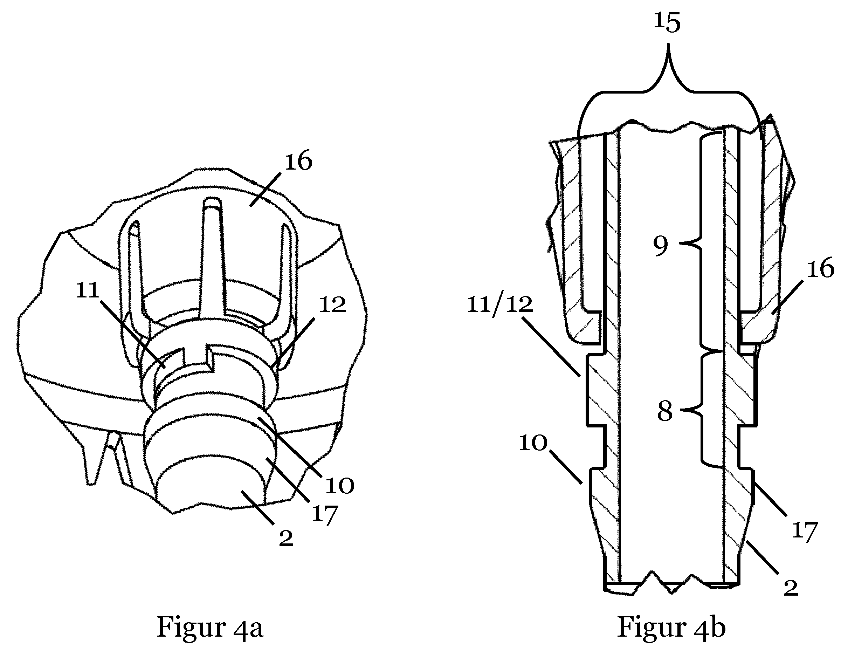

Figuren 4a und 4b zeigen perspektivische Detailansichten der in den Figuren 2 gezeigten Ausführungsform des mindestens einen ersten und des mindestens einen zweiten Fixiermittels mit aufgesetztem Halteteller 6 in der ersten Position (Figur 4a) und in der zweiten Position (Figur 4b)

## Patentansprüche

1. Ein Befestigungssystem (1) insbesondere zur Befestigung von Dämmstoff an einem Untergrund, aufweisend:
ein Spreizelement (2) und
einen Halteteller (6), zum Halten des Dämmstoffs,
wobei das Spreizelement (2) an einem ersten Endbereich (3) Mittel (4) zum Aufspreizen eines Dübels (5) aufweist, wobei das Spreizelement (2) an einem zweiten Endbereich (7) mindestens ein erstes Fixiermittel (8) und mindestens ein zweites Fixiermittel (9) aufweist, die jeweils ausgestaltet sind, um den Halteteller (6) axial zu fixieren, und
wobei das mindestens eine erste Fixiermittel (8) an dem Spreizelement (2) näher an dem ersten Endbereich (3) angeordnet ist als das mindestens eine zweite Fixiermittel (9) und das mindestens eine erste Fixiermittel (8) derart ausgestaltet ist, dass es den Halteteller (6) bis zur Ausübung einer bestimmten Kraft axial fixiert,
**dadurch gekennzeichnet, dass**
das mindestens eine erste Fixiermittel (8) mindestens eine schiefe Ebene (11) aufweist, die in radialer Richtung ausgerichtet ist und axial in Richtung des zweiten Fixiermittels (9) in einen umlaufenden Ring (12) übergeht.

2. Das Befestigungssystem (1) nach Anspruch 1, **dadurch gekennzeichnet, dass** das mindestens eine zweite Fixiermittel (9) einen umlaufenden Ring (13) aufweist.

3. Das Befestigungssystem (1) nach einem der Ansprüche 1 bis 2, **dadurch gekennzeichnet, dass** das Spreizelement (2) eine Schraube ist.

4. Das Befestigungssystem (1) nach Anspruch 3, **dadurch gekennzeichnet, dass** die Schraube aus Kunststoff besteht.

5. Das Befestigungssystem (1) nach einem der Ansprüche 1 bis 4, **dadurch gekennzeichnet, dass** der Halteteller (6) an der dem Dämmstoff zugewandten Seite mindestens ein Schneidmittel aufweist.

6. Das Befestigungssystem (1) nach Anspruch 5, **dadurch gekennzeichnet, dass** das mindestens eine Schneidmittel mindestens einen Schneidzahn (14) aufweist.

7. Das Befestigungssystem (1) nach einem der Ansprüche 1 bis 6, **dadurch gekennzeichnet, dass** das Spreizelement (2) und der Halteteller (6) aus unterschiedlichen Materialien gefertigt sind.

8. Das Befestigungssystem (1) nach einem der Ansprüche 1 bis 7, **dadurch gekennzeichnet, dass** der Halteteller (6) eine zentrische Öffnung (15) zur Aufnahme des Spreizelements (2) aufweist.

9. Das Befestigungssystem (1) nach einem der Ansprüche 1 bis 8, **dadurch gekennzeichnet, dass** der Halteteller (6) mindestens einen Rasthaken (16) aufweist.

10. Das Befestigungssystem (1) nach einem der Ansprüche 1 bis 9, **dadurch gekennzeichnet, dass** an dem zweiten Endbereich (7) des Spreizelements (2) eine Dämmstoffrondelle (18) angeordnet ist.

11. Verfahren zur Befestigung von Dämmstoff an einem Untergrund, aufweisend:
Setzen eines Spreizelements (2) in einen Untergrund, wobei mindestens ein erstes Fixiermittel (8) einen Halteteller (6) an dem Spreizelement (2) axial fixiert;
Eintreiben des Spreizelements (2) in einen Dübel (5) angeordnet in dem Untergrund, wobei das mindestens eine erste Fixiermittel (8) den Halteteller (6) so lange axial fixiert, bis der Halteteller (6) eine bestimmte Kraft auf das mindestens eine erste Fixiermittel (8) ausübt; und
weiter Eintreiben des Spreizelements (2) in den Dübel (5) über eine schiefe Ebene (11) des mindestens einen ersten Fixiermittels (8), die in radialer Richtung ausgerichtet ist und axial in Richtung eines mindestens zweiten Fixiermittels (9) in einen umlaufenden Ring (12) übergeht,wobei das mindestens eine zweite Fixiermittel (9) an dem Spreizelement (2) den Halteteller (6) axial fixiert.

## Claims

1. A fastening system (1) in particular for fastening of insulation material to a substructure, comprising:
an expansion element (2) and
a holding plate (6) for holding the insulation material,
wherein the expansion element (2) at a first end portion (3) comprises means (4) for expanding a dowel (5), wherein
the expansion element (2) at a second end portion (7) comprises at least a first means for fixing (8) and at least a second means for fixing (9), which each are adapted to axially fix the holding plate (6), and wherein the at least one first means for fixing (8) at the expansion element (2) is arranged closer to the first end portion (3), than the at least one second means for fixing (9) and the at least one first means for fixing (8) is adapted in such a way, that it axially fixes the holding plate (6) up to the exertion of a determined force,
**characterized in that**
the at least one first means for fixing (8) comprises at least one inclined plane (11), which is oriented in radial direction and axially in the direction of the second means for fixing (9) merges into a circumferential ring (12).

2. The fastening system (1) according to claim 1, **characterized in that** the at least one second means for fixing (9) comprises a circumferential ring (13).

3. The fastening system (1) according to one of the claims 1 to 2, **characterized in that** the expansion element (2) is a screw.

4. The fastening system (1) according to claim 3, **characterized in that** the screw consists of plastic.

5. The fastening system (1) according to one of the claims 1 to 4, **characterized in that** the holding plate (6), at the side facing the insulation material, comprises at least one means for cutting.

6. The fastening system (1) according to claim 5, **characterized in that** the at least one means for cutting comprises at least one cutting tooth (14).

7. The fastening system (1) according to one of the claims 1 to 6, **characterized in that** the expansion element (2) and the holding plate (6) are made out of different materials.

8. The fastening system (1) according to one of the claims 1 to 7, **characterized in that** the holding plate (6) comprises a central opening (15) for the accommodation of the expansion element (2).

9. The fastening system (1) according to one of the claims 1 to 8, **characterized in that** the holding plate (6) comprises at least a latching hook (16).

10. The fastening system (1) according to one of the claims 1 to 9, **characterized in that** at the second end portion (7) of the expansion element (2) an insulation material rondel (18) is arranged.

11. Method for fastening insulation material to a substructure, comprising:
Setting the expansion element (2) into a substructure, wherein at least one first means for fixing (8) axially fixes a holding plate (6) to the expansion element (2);
driving in the expansion element (2) into a dowel (5) arranged in the substructure, wherein the at least one first means for fixing (8) axially fixes the holding plate (6) for such a long time until the holding plate (6) exerts a determined force onto the at least one first means for fixing (8); and
further driving in the expansion element (2) into the dowel (5) over the inclined plane (11) of the at least one first means for fixing (8), which is oriented in radial direction and axially in direction of one at least second means for fixing (9) merges into a circumferential ring (12), wherein the at least one second means for fixing (9) at the expansion element (2) axially fixes the holding plate (6).

## Revendications

1. Système de fixation (1), en particulier pour fixer un matériau isolant sur un substrat, comprenant :
un élément d'expansion (2), et
un disque de support (6), pour supporter le matériau isolant,
dans lequel l'élément d'expansion comprend dans une première zone terminale (3) des moyens (4) pour expanser un goujon (5),
dans lequel l'élément d'expansion (2) comprend dans une deuxième zone terminale (7) au moins un premier moyen de fixation (8) et au moins un deuxième moyen de fixation (9), dont chacun est conçu pour fixer axialement le disque de support (6), et
dans lequel le ou les premiers moyens de fixation (8) sont disposés contre l'élément d'expansion (2), plus près de la première zone terminale (3) que le ou les premiers moyens de fixation (9), et le ou les premiers moyens de fixation (8) sont conçus de façon à fixer axialement le disque de support (6) jusqu'à exercer une certaine force,
**caractérisé en ce que** le ou les premiers moyens de fixation (8) comprennent au moins un plan oblique (11), qui est orienté dans une direction radiale et qui, axialement dans la direction du deuxième moyen de fixation (9), se poursuit par une bague tournante (12).

2. Système de fixation (1) selon la revendication 1, **caractérisé en ce que** le ou les deuxièmes moyens de fixation (9) comprennent une bague tournante (13).

3. Système de fixation (1) selon l'une des revendications 1 à 2, **caractérisé en ce que** l'élément d'expansion (2) est une vis.

4. Système de fixation (1) selon la revendication 3, **caractérisé en ce que** la vis est constituée d'un matériau plastique.

5. Système de fixation (1) selon l'une des revendications 1 à 4, **caractérisé en ce que** le disque de support (6) présente sur sa face dirigée vers le matériau isolant au moins un moyen coupant.

6. Système de fixation (1) selon la revendication 5, **caractérisé en ce que** le ou les moyens coupants comprennent au moins une dent coupante (14).

7. Système de fixation (1) selon l'une des revendications 1 à 6, **caractérisé en ce que** l'élément d'expansion (2) et le disque de support (6) sont fabriqués en des matériaux différents.

8. Système de fixation (1) selon l'une des revendications 1 à 7, **caractérisé en ce que** le disque de support (6) comprend une ouverture centrale (15) destinée à recevoir l'élément d'expansion (2).

9. Système de fixation (1) selon l'une des revendications 1 à 8, **caractérisé en ce que** le disque de support (6) comprend au moins un crochet d'arrêt (16).

10. Système de fixation (1) selon l'une des revendications 1 à 9, **caractérisé en ce qu'**une rondelle (18) de matériau isolant est disposée contre la deuxième zone terminale (7) de l'élément d'expansion (2).

11. Procédé de fixation d'un matériau isolant sur un substrat, comprenant :
la mise en place d'un élément d'expansion (2) dans un substrat, au moins un premier moyen de fixation (8) fixant axialement un disque de support (6) contre l'élément d'expansion (2) ;
enfoncement de l'élément d'expansion (2) dans un goujon (5) disposé dans le substrat, le ou les premiers moyens de fixation (8) fixant axialement le disque de support (6) jusqu'à ce que le disque de support (6) exerce une certaine force sur le ou les premiers moyens de fixation (8) ; et
enfoncement plus poussé de l'élément d'expansion (2) dans le goujon (5), sur un plan oblique (11) du ou des premiers moyens de fixation (8), qui est orienté dans la direction axiale et qui se poursuit axialement, dans la direction d'au moins un deuxième moyen de fixation (9), par une bague tournante (12), le ou les deuxièmes moyens de fixation (12) fixant axialement le disque de support (6) contre l'élément d'expansion (2).
